# EUROPEAN PATENT APPLICATION

(11) **EP 4 252 595 A1**
(43) Date of publication of application: **04.10.2023**
(21) Application number: 22166339.6
(22) Date of filing: 01.04.2022
(51) Int. Cl.: A47G 33/08, A47G 33/12

(54) **A LOW WATER INDICATOR**

(71) Applicant: Bright Trade International AB, 236 42 Höllviken (SE)
(72) Inventor: LINDOW, Fredrik, 23642 Höllviken (SE)
(74) Representative: Hansson Thyresson AB

(57) **Abstract**

A low water indicator (10) comprising an indicator module (12) comprising a control unit (18); a submersible housing (14) with a low water detector (20) connected to said control unit through a cable (16); wherein: a sloping top surface (30) of said submersible housing is formed as a truncated cone with a smaller top area (32), the cable extends from the top area (32), and the low water detector (20) comprises two terminals (20a, 20b) exposed on said sloping top surface (30) below the top area (32); and wherein the control unit (18) is configured to activate the indicator module (12) when the low water detector (20) detects absence of water between the terminals (20a, 20b).

## Description

### TECHNICAL FIELD

The present invention relates generally to a low water indicating device.

### BACKGROUND

It is well known to support Christmas trees, or similar plants, in a stand with a water reservoir. The water reservoir must be refilled periodically to replenish the water which is absorbed by the tree or evaporates. The plant normally extends over and cover the water reservoir which would make it advantageous to replenish water only if required.

From the above it is understood that there is room for improvements and the invention aims to solve or at least mitigate the above and other problems.

### SUMMARY

The disclosed device is a low water indicator that will indicate when the water level in the reservoir is too low. The low water indicator comprises an indicator unit that can be placed at an arbitrary height in the plant or Christmas tree and a low water detector that is placed in the reservoir. The indicator unit and the low water detector are connected through a cable.

In various embodiments, the low water detector comprises a submersible housing and the indicator unit comprises a LED (Light Emitting Diode) snowflake.

The submersible housing is provided with separated electric terminals at a height above a bottom of the housing. The terminals are short circuited by water in the reservoir during normal use. A voltage applied at one terminal will result in a similar or equal voltage at the other terminal. However, when the water level in the reservoir falls below a level where the terminals are positioned, they will no longer be short circuited. This is detected by a control unit and the low level of water will indicated by the indicator unit. In various embodiments, the indicator unit will start blinking or flashing when the water level is too low.

The terminals mostly will be covered or partly covered by water. These conditions in combination with an electric current flowing between the terminals may cause problems with corrosion of the terminals. In various embodiments, the terminals protrude from a sloping edge of the submersible housing. Thus, less water will remain on the terminals when the water level decreases. As a result, there will be less corrosion of the terminals.

In various embodiments, corrosion is further reduced by reducing the time current is flowing through the terminals. In one embodiment this is done by allowing current to flow during some time intervals only. This will also result in prolonging the battery lifetime. It may be advantageous to prolong the time periods when a voltage is applied to one terminal or maintain a continuous voltage supply when a low water condition has been detected. As a result, an increased water level can be detected more rapidly.

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect, there is provided a low water indicator comprising an indicator module comprising a control unit; a submersible housing with a low water detector connected to said control unit through a cable; wherein: a sloping top surface of said submersible housing is formed as a truncated cone with a smaller top area, the cable extends from the top area, and the low water detector comprises two terminals exposed on said sloping top surface below the top area; and wherein the control unit is configured to activate the indicator module when the low water detector detects absence of water between the terminals.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic perspective view of the disclosed low water indicator with an indicator unit and a submersible housing,
- Fig 2: is a schematic perspective view showing a rear side of the indicator unit of the disclosed low water indicator,
- Fig 3: is schematic side view of a first embodiment of the submersible housing,
- Fig 4: is schematic side view of a second embodiment of the submersible housing,
- Fig 5: is schematic side view of a third embodiment of the submersible housing,
- Fig 6: is a schematic block diagram of the disclosed low water indicator, and
- Fig 7: is a more detailed circuit diagram of the disclosed low water indicator.

Further, in the figures like reference characters designate like or corresponding parts throughout the several figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

In the description and claims the word "comprise" and variations of the word, such as "comprising" and "comprises", does not exclude other elements or steps.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

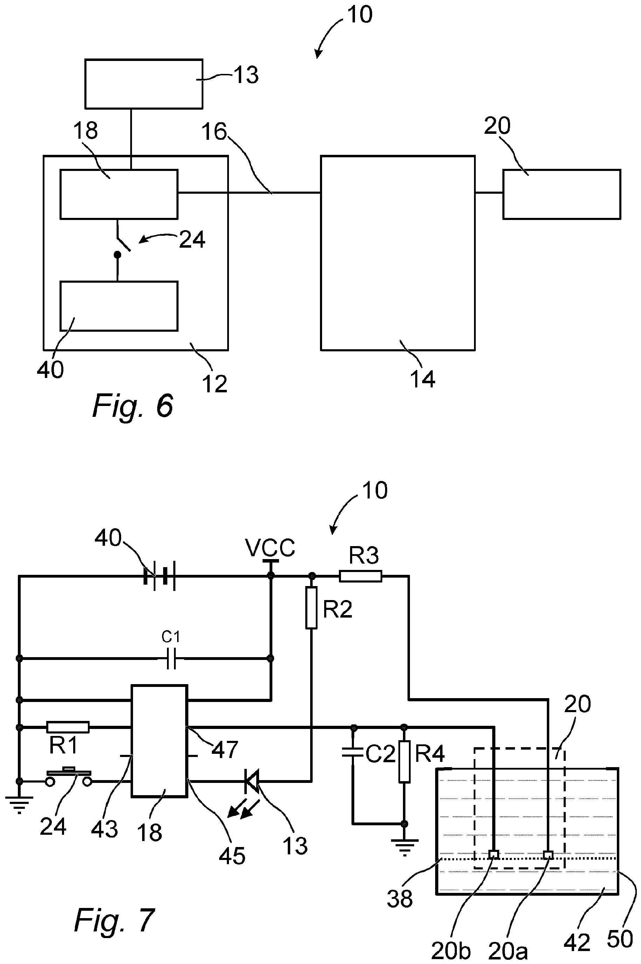

The disclosed low water indicator 10 comprises an indicator module 12 and submersible housing 14. A cable 16 extends from the submersible housing 14 to a control unit 18 inside the indicator module 12. The indicator module 12 is provided with a light emitting element 13 formed as a snowflake and comprises at least one LED (Light Emitting Diode). Inside the indicator module 12 there is provided a suitable power source, such as a battery. The submersible housing 14 is provided with a low water detector 20 with two terminals 20a and 20b, c.f. also Fig. 6.

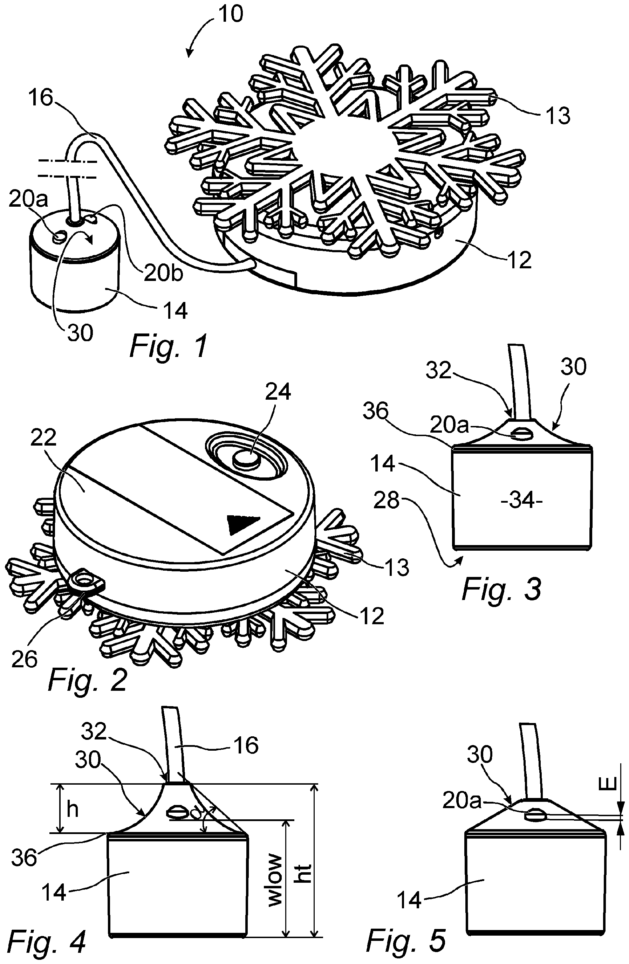

On the rear side of the indicator module 12, as shown in Fig. 2, there is provided a lid 22 covering a space for the power source, and a switch 24 for switching the low water indicator 10 on and off. There is also provided a fastening eye 26 that can be used for attaching the indicator module 12 at an appropriate position in a plant, such as a Christmas tree.

A first embodiment of the submersible housing 14 is shown in Fig. 3. In various embodiments, the submersible housing 14 is formed as a cylinder with a bottom section 28, a sloping and curved top surface 30, and a cylindrical section 34 interconnecting the bottom section 28 and a lower section of the sloping top surface 30. The two terminals 20a and 20b extend from the sloping top surface 30 by a height E. The height E is at least 0,2 mm and preferably in an interval between 0,2 mm and 2,5 mm. The top surface 30 is formed as a truncated cone and extends from a smaller top area 32 to top edge 36 of the cylindrical section 34. As a result of the terminals 20a and 20b extending from the sloping top surface 30 and the inclination itself of the sloping top surface, water will not remain or stay on the terminals when the water level is below the terminals. In various embodiments, the terminals 20a and 20b are arranged at diagonal positions on either side of the top area 32 as depicted in Fig. 1.

In the embodiment of the submersible housing 14 shown in Fig. 4, the sloping top surface 30 is still curved but steeper. The height of the top surface is depicted h in Fig. 3 to Fig. 5. In the embodiment of the submersible housing 14 shown in Fig. 5, the top surface 30 forms a straight line. When a water level is wlow as indicated in Fig. 4 or lower, the terminals 20a and 20b will not be in contact with any water. When a water level is higher than wlow as indicated in Fig. 4, the terminals 20a and 20b will be in contact with water. In various embodiments, the terminals 20a and 20b are arranged at the same height from the bottom section 28.

A slope angle of the sloping top surface 30, that is an angle α between a horizontal line extending along an upper side of the cylindrical section 34 and the smaller top surface 34, as shown in Fig. 4, is at least about 15° and can be about 55°. In the embodiment shown in Fig. 4, the angle α is about 45°. Normally, the angle α is in the interval between 15° and 45°, and preferably the angle α is in the interval between 20° and 40°. The total height ht of the submersible housing 14 normally is in the interval 15 mm to 25 mm, and the height h of the top surface as shown in Fig. 4 is larger than 3 mm. in various embodiments, the height h of the top surface is in the interval 6 mm to 10 mm.

The schematic diagram of Fig. 6 shows a general block diagram of the disclosed low water indicator 10. The control unit 18 and a power source 40, such as a battery, are provided in the indicator module 12. By turning on and off the switch 24, the control unit 18 and other components of the low water indicator 10 are switched on and off, respectively. The low water detector 20 has an extension outside the submersible housing 14.

The more detailed circuit diagram of Fig. 6 shows different components that can be used for implementing the disclosed low water indicator 10. The control unit 18 is a conventional micro control unit, such as a ASCHIP MCU 8, which is power supplied by a power source 40. In various embodiments, the power source 40 comprises two conventional AAA batteries. The switch 24 connects the control unit 18 to ground. In an example, the low water detector 20 comprises a first terminal 20a and a second terminal 20b. The first terminal 20a is connected to the power source (VCC) through a serial resistor R3, and the second terminal 20b is connected to a first pin 47 of the control unit 18. When both terminals 20a and 20b are submersed in a water reservoir 50, c.f. Fig. 7, there will be a current flow through the serial resistor R3, the present resistance in the water in the reservoir 50, and through a grounding resistor R4. The current flow will produce a voltage over grounding resistor R4. This voltage is received as an input signal at the first pin 47 and is used by the control unit 18 as an indication that the water level in the water reservoir is sufficiently high.

Should the water level drop to a level where at least one of the terminals 20a and 20b is not submersed in water, the current through the serial resistor R3 will drop substantially or cease completely. As a result, the voltage over grounding resistor R4 will be low or even zero and the input signal at the first pin 47 will also be low. This is used by control unit 18 as an indication that the water level in the water reservoir 50 is below a level indicative of a low water level 38 as depicted in Fig. 7. When a low level signal is sensed at the first pin 47, the control unit 18 will provide a zero signal at a second pin 45. As a result, current will flow from the battery 40 through limiting resistor R2, the light emitting element 13, which then will light up, and to the second pin 45. In various embodiments, a signal level at the second pin 45 will alternate between high and low which will result in flashing of the light emitting element 13. In one embodiment, the light emitting element 13 will flash at a first frequency, such as one 1 Hz, or specifically during about 0,5 seconds per second.

Switching on the switch 24, will make the control unit 18 and other components operable. It would be possible to improve the resistance to corrosion of the terminals by allowing a current to flow only during some time intervals, such as during less than one second every thirty seconds. In various embodiments, this can be done by removing the connection of grounding resistor R4 to ground and instead connect grounding resistor R4 to a second terminal 43 of the control unit 18. The second terminal 43 will be set to a low level during a short time period of a thirty seconds time period and to a high level during the remaining thirty seconds period. Thus, current is allowed to flow from the battery through the serial resistor R3, the first terminal 20a, water, the second terminal 20b, the grounding resistor R4 and to the second pin 45 of the control unit 18 only during a fraction of the thirty seconds period.

The various embodiments described above are provided by way of illustration only and should not be construed to limit the invention. Those skilled in the art will readily recognize various modifications and changes that may be made to the present invention without following the example embodiments and applications illustrated and described herein, and without departing from the scope of the present disclosure.

## Claims

1. A low water indicator (10) comprising
an indicator module (12) comprising a control unit (18);
a submersible housing (14) with a low water detector (20) connected to said control unit through a cable (16);
wherein: a sloping top surface (30) of said submersible housing is formed as a truncated cone with a smaller top area (32), the cable extends from the top area (32), and the low water detector (20) comprises two terminals (20a, 20b) exposed on said sloping top surface (30) below the top area (32);
and wherein the control unit (18) is configured to activate the indicator module (12) when the low water detector (20) detects absence of water between the terminals (20a, 20b).

2. The low water indicator (10) as claimed in claim 1, wherein the terminals (20a, 20b) extend from said sloping top surface (30).

3. The low water indicator (10) as claimed in claim 1 or claim 2, wherein the terminals (20a, 20b) are arranged at substantially the same distance (wlow) from a bottom section (28) of the submersible housing (14).

4. The low water indicator (10) as claimed in any of the preceding claims, wherein a height (h) of the sloping top surface (30) is at least 3 mm.

5. The low water indicator (10) as claimed in claim 4, wherein a height (h) of the sloping top surface (30) is in the interval 6 mm to 10 mm.

6. The low water indicator (10) as claimed in claim 2, wherein the terminals (20a, 20b) extend at least a distance 0,2 mm from said sloping top surface (30).

7. The low water indicator (10) as claimed in claim 1, wherein a slope angle α of the sloping top surface (30) is at least 15°.

8. The low water indicator (10) as claimed in claim 1, wherein a slope angle α of the sloping top surface (30) is in the interval between 15° and 45°.

9. The low water indicator (10) as claimed in claim 1, wherein the control unit (18) is configured to detect a voltage signal indicative of a current flow between said two terminals (20a, 20b) when submersed in water, and to activate the indicator module (12) in response to the detection of the voltage signal.

10. The low water indicator (10) as claimed in claim 1, wherein the control unit (18) is configured to activate the indicator module (12) into a flashing mode where the indicator module (12) alternately is switched on and switched of.

11. The low water indicator (10) as claimed in claim 1, wherein the control unit (18) is configured to alternately allow and prevent a current flow between said two terminals (20a, 20b) when submersed in water, wherein the flow of current is allowed during a time period that is considerably shorter than a time period where the flow of current is prevented.

12. The low water indicator (10) as claimed in claim 11, wherein the time period when a flow of current is prevented is at least ten times longer than the time period where the flow of current is allowed.

13. The low water indicator (10) as claimed in claim 12, wherein the time period when a flow of current is prevented is at least thirty seconds.

14. A method of detecting and indicating absence of water by detecting existence and absence, respectively, of a current flow in water between two terminals (20a, 20b) and producing a flashing signal when the absence of current flow is detected, wherein said two terminals (20a, 20b) are arranged extending from a submersible housing (14).

15. The method of detecting and indicating absence of water as claimed in claim 14, further comprising alternately allowing and preventing the current flow, wherein a time period when the current flow is prevented is substantially longer than a time period when the current flow is allowed.
